Europäisches Patentamt

European Patent Office

Office européen des brevets

(19)

(11) Veröffentlichungsnummer : **0 347 608 B1**

(12) # EUROPÄISCHE PATENTSCHRIFT

(45) Veröffentlichungstag der Patentschrift :
**26.02.92 Patentblatt 92/09**

(51) Int. Cl.$^5$ : **F16L 17/02**

(21) Anmeldenummer : **89109484.9**

(22) Anmeldetag : **26.05.89**

(54) **Dichtring.**

(30) Priorität : **20.06.88 DE 3820802**

(43) Veröffentlichungstag der Anmeldung :
**27.12.89 Patentblatt 89/52**

(45) Bekanntmachung des Hinweises auf die
Patenterteilung :
**26.02.92 Patentblatt 92/09**

(84) Benannte Vertragsstaaten :
**BE ES FR GB IT NL**

(56) Entgegenhaltungen :
**AT-B- 360 290
DE-B- 1 214 955
FR-A- 2 196 050
GB-A- 1 058 454**

(73) Patentinhaber : **WOCO Franz-Josef Wolf & Co.
Sprudelallee 19
W-6483 Bad Soden-Salmünster (DE)**

(72) Erfinder : **Wolf, Franz Josef
Sprudelallee 19
W-6483 Bad Soden-Salmünster (DE)**
Erfinder : **Hofacker, Günter
Sprudelallee 19
W-6483 Bad Soden-Salmünster (DE)**
Erfinder : **Lauer, Hansjörg
Marburger Strasse 5
W-6483 Bad Soden-Salmünster (DE)**

(74) Vertreter : **Jaeger, Klaus, Dr. et al
Patentanwälte Jaeger-Steffens-Lorenz &
Köster Pippenplatz 4a
W-8035 München-Gauting (DE)**

EP 0 347 608 B1

Jouve, 18, rue Saint-Denis, 75001 PARIS

## Beschreibung

Die Erfindung betrifft einen Dichtring für eine Rohrsteckverbindung zwischen einem Spitzende und einer Muffe der im Oberbegriff des Anspruchs 1 genannten Art.

Insbesondere betrifft die Erfindung einen Dichtring für Rohre mit größerem Durchmesser aus mineralischen Werkstoffen, vor allem für Rohre aus gebrannten und glasierten Tonmineralien.

Mit anderen Worten, die Erfindung betrifft also speziell einen Dichtring, der im Dichtspalt einer Rohrsteckverbindung einerseits relativ große Fertigungstoleranzen sicher überbrückend abdichten und gleichzeitig andererseits durchaus beachtliche Scheitellasten, das heißt Radiallasten, aufnehmen muß.

Für diesen speziellen Aufgaben- und Einsatzbereich ist ein Dichtring im praktischen Gebrauch, der aus einem Dichtringabschnitt, einem Halteringabschnitt und einem Zwischenringabschnitt besteht. Der Dichtringabschnitt ist nach Art eines Keilschnurringes dergestalt ausgebildet, daß, bezogen auf die Muffe, der breite Basisabschnitt des Dichtringes axial auswärts weist und der verjüngte Innenabschnitt dieses Dichtringabschnitts in den Zwischenringabschnitt übergeht. Der Halteringabschnitt ist zumindest im wesentlichen als innenflanschartiger Kreisring ausgebildet, der radial außen mit dem manschettenartigen Zwischenringabschnitt verbunden und radial innen mit einem Bewehrungsring aus Stahl versehen ist.

Um der relativ großen Radiallast Stand zu halten, ist der Dichtring also so ausgelegt, daß er die erforderliche Dichtkraft im Dichtspalt ausschließlich durch eine Materialverpressung erzeugt. Da jedoch gleichzeitig aufgrund der für Rohre aus mineralischen Werkstoffen typischerweise großen Fertigungstoleranzen, die im Dichtspalt wirksam sind, für jeden nennweiten Bereich relativ breite Dichtspaltenbereiche sicher dichtend überbrückt werden müssen, muß der Dichtringabschnitt des bekannten Dichtringes relativ breit, das heißt mit relativ reichlich bemessenem radialen Übermaß, dimensioniert werden. Dies bedeutet für Ringe, die nach dem Prinzip der Materialverpressung dichten, jedoch eine erhebliche Vergrößerung der zum Einschieben eines mit einem solchen Ring bestückten Spitzendes in die Muffe erforderlichen Einschubkraft im Bereich der im Toleranzbereich schmaleren Dichtspaltbreiten. Unabhängig davon, daß diese Eigenschaften zu einer beachtlichen Benutzungsbeeinträchtigung führen, treten bei den hohen Einschubkräften, die für das Einschieben des aufgespannten Dichtringabschnittes in eine Muffe erforderlich werden, auch erhebliche Belastungen, und zwar Zugbelastungen, im Zwischenringabschnitt und vor allem auch im Halteringabschnitt des Dichtringes auf, der durch den Einschubzug über die Außenkante der Stirnseite des Spitzendes gezogen wird. Diese Verhältnisse haben dazu geführt, daß einerseits der Dichtringabschnitt aus einem recht weich eingestellten Gummi hergestellt werden mußte, während der Halteringabschnitt aus einem recht hart eingestellten Gummi hergestellt werden muß, um Überdehnungen und Rißbildungen in diesem Ringabschnitt zu vermeiden. In der Praxis ist dieser Dichtring daher als integrierter Dichtring aus zwei Gummihärten aufgebaut, wobei der Dichtringabschnitt aus einem Gummi mit einer Härte im Bereich von 40 Shore-A und der Haltering aus einem Gummi mit einer Härte im Bereich um 75 Shore-A besteht.

Der bekannte Dichtring ist also nicht nur in seiner anwendungstechnischen Handhabung problematisch, sondern auch durch seine relativ aufwendige Herstellung vergleichsweise teuer.

Aus der österreichischen Patentschrift AT-B-360 290 ist eine Muffenrohrdichtung für Rohre aus metallischen Werkstoffen, d.h. für Rohrsteckverbindungen mit sehr kleinen Dichtspalttoleranzen, insbesondere für Fernwärmerohre, bekannt. Der zwischen der Innenwandfläche der Muffe und der Außenmantelfläche des Spitzendes gebildete Dichtspalt ist durch einen Dichtring verschlossen, der in eine in der Innenwandfläche der Muffe speziell ausgebildete Ringnut eingelegt ist. Um die gestellte Aufgabe der Herstellung einer dauerhaft korrosionsfesten Dichtung zu erfüllen, beteht der bekannte Dichtring ebenso wie der vorstehend erörterte Dichtring aus zwei unterschiedlichen Werkstoffen, ist also einer Kostenkategorie zuzuordnen, die für technisch aufwendige Rohrleitungen wie beispielsweise Fernwärmerohrleitungen tragbar ist, nicht aber für Alltags-Kanalisationsrohrsysteme aus Rohren aus mineralischen Werkstoffen, auf die der Gegenstand des vorliegenden Patents Bezug nimmt.

Der in der Muffennut der bekannten Muffenrohrdichtung verwendete Dichtring ist ein Spreizlippenring, der sich nach axial innen öffnet und dessen radiale Materialverpressung von der axial außenliegenden Spreizringwurzel zu den axial innenliegenden Lippenrändern kontinuierlich abnimmt, da die durch die Profilierung der Muffenringnut bestimmte sich nach axial innen aufweitende Dichtspaltbreite stärker als die Summe der radialen Breiten der Dichtlippen des Dichtringes zunimmt.

Ausgehend von diesem Stand der Technik liegt der Erfindung die Aufgabe zugrunde, einen Dichtring der eingangs beschriebenen Art speziell für die Dichtung von Rohrsteckverbindungen mit relativ großen Toleranzbereichen der Dichtspaltbreite und relativ großen wirksamen Radiallasten zu schaffen, der auch im Bereich der mittleren und kleineren Dichtspaltbreiten mit vergleichsweise geringen Einschubkräften verwendet und daher einfacher und kostengünstiger als der bekannte Dichtring ausgelegt werden kann.

Gemäß der Erfindung ist diese Aufgabe dadurch gelöst, daß der Dichtringabschnitt eines solchen Dichtringes die im kennzeichnenden Teil des Anspruchs 1 genannten Merkmale aufweist.

Die vorstehend genannte Aufgabe wird also durch einen Dichtring gelöst, der nach einem wesentlichen Merkmal der Erfindung einerseits zwar als Lippendichtring, genauer als Spreizlippendichtring, bezeichnet werden kann, andererseits aber durch seine Konfiguration so ausgelegt ist, daß die radiale Dichtkraft im axial äußeren Randbereich der sich nach axial außen V-förmig öffnenden Dichtlippenringe zu einem wesentlichen Teil durch eine Materialverpressung mitaufgebracht wird, und zwar axial beschränkt auf den axial äußeren Randbereich des Spreizlippenpaares. Aufgrund dieser Grundkonzeption des Dichtringes gemäß der Erfindung können die zum Einschieben des Dichtringes auch bei Dichtspaltbreiten im unteren Toleranzbereich erforderlichen Einschubkräfte so weit erniedrigt werden, daß einerseits die Härte des Gummis im Bereich des Dichtringabschnittes vergrößert werden kann, was im Sinne einer mechanischen Widerstandsfähigkeit wünschenswert ist, gleichzeitig aber auch der auf den Haltering und den Zwischenringabschnitt wirkende Zug so weit vermindert werden kann, daß die zur Stabilisierung dieser Ringabschnitte erforderliche Gummihärte deutlich vermindert werden kann, und zwar bis auf solche Werte, daß der Gesamtring nunmehr aus einer Gummimasse einer einzigen Shore-Härte hergestellt werden kann. Dies erspart die Kosten für die aufwendige Fertigung von Gummiformkörpern mit zwei oder mehr unterschiedlichen Gummihärten. Dabei wird gegenüber dem bekannten Dichtring die durch die verminderte Materialpressung verminderte radiale Dichtkraft durch die Dichtkraft der Spreizlippe kompensiert, während die radiale mechanische Kraft und Festigkeit zur Aufnahme der Radialkräfte durch die flächig und bündig im Randbereich aufeinandergepreßten Dichtlippen vollständig ausreichend zur Verfügung gestellt werden.

Ergänzend können zur Verbesserung der Dichtwirkung auch gegenüber extrem ungünstigen Verhältnissen, beispielsweise im oberen Scheitel einer Steckverbindung, deren Spitzende gegenüber der Muffe in Richtung vom Scheitel zur Sohle stark belastet ist, zusätzlich Ausgestaltungen vorgesehen sein, die die Dichtwirkung des Dichtringabschnittes sowohl gegenüber der Außenwand des Spitzendes als auch gegenüber der Innenwand der Muffe weiter verbessern.

Zu diesem Zweck ist vorzugsweise die radial innenliegende Dichtlippe des Spreizlippenringes so ausgebildet, daß sie sich mit ihrer radialen Innenwandfläche nach axial auswärts, wiederum stets auf die Muffe bezogen, stark verjüngt, und zwar bis auf einen lichten Innendurchmesser im entspannten Dichtring, der wesentlich kleiner als der im Toleranzbereich kleinstmögliche Außendurchmesser des Spitzendes ist, während die axial auswärts liegende Flankenfläche dieser radial innenliegenden Dichtlippe zumindest im wesentlichen zylindrisch ausgebildet ist, und zwar koaxial zur Mittelachse des Dichtringes bzw. zur Mittelachse der Rohrleitung, und dabei einen Durchmesser aufweist, der zumindest im wesentlichen gleich oder nur geringfügig größer als der im Toleranzbereich kleinste Außendurchmessers des vom Dichtring aufzunehmenden Spitzendes ist. Dies führt dazu, daß beim Aufstecken des Dichtringes auf den Kragen des Spitzendes eine relativ starke Aufweitung und radial auswärts gerichtete Verformung des radial inneren Dichtlippenringes in dessen axial äußerem Randbereich erfolgt. Dies führt nicht nur auf der Außenwand des Spitzendes durch die radial einwärts wirkende Ringspannung zu einer verbesserten Dichtung, sondern führt auch durch eine Befestigung des gedehnten Gummis zu einem wirksameren Andruck des Außenrandes der Gegenlippe in der gesteckten Rohrverbindung.

Zur Verbesserung der Dichtung am Innenmantel der Muffe ist weiterhin vorzugsweise unter Bildung eines zweiten, sich im unverspannten Dichtring im Axialschnitt nach axial innen V-förmig öffnenden Spreizlippenringes am axial außenliegenden Rand der radial außenliegenden Dichtlippe eine dritte, nach radial auswärts und axial einwärts schräggestellte Dichtlippe angeformt. Beim Einschieben des auf den Kragen des Spitzendes aufgesetzten Dichtringes wird diese Dichtlippe von der Stirnseite der Muffe umgeschlagen, so daß sie praktisch ohne jeglichen Einfluß auf die Einschubkraft allein durch ihre Spreizverformung als zusätzliche Lippendichtung zwischen dem Dichtring und der Innenwand der Muffe wirkt.

Nach dieser Ausgestaltung des Dichtringes gemäß der Erfindung dienen also die Konfiguration der radial innenliegenden Dichtlippe der sich nach axial außen öffnenden Spreizlippe und die Ausbildung und Anordnung der zusätzlichen dritten Dichtlippe an der radial außenliegenden Dichtlippe der sich nach axial außen öffnenden Spreizlippe zusätzliche Maßnahmen zur Dichtung der Außenwand des Spitzendes gegenüber dem Dichtring und der Innenwand der Muffe gegenüber dem Dichtring, wobei die Verfestigung des Elastomers durch die Aufweitung am Spitzende die Auflagekraft für die Aufnahme von Radiallasten erhöht, ohne daß eine Überdimensionierung eines relativ weich eingestellten Gummis erforderlich ist. Insbesondere bei dieser Konfiguration des Dichtringes gemäß der Erfindung weist der erfindungsgemäße Dichtring gegenüber dem aus dem Stand der Technik bekannten Dichtring mit der reinen Materialverpressung eine unter allen Lastbedingungen und Toleranzbedingungen verbesserte Dichtheit bei gleichzeitig verminderter ungünstigster Einschubkraft auf, während durch die Fertigung des Dichtringes mit nur einer einzigen Gummimischung in einem einzigen Arbeitstakt eine spürbare Senkung der Herstellungskosten solcher Dichtringe erreicht wird.

Die Erfindung ist im folgenden anhand eines Ausführungsbeispiels in Verbindung mit der Zeichnung näher erläutert. Dabei zeigen:

Fig. 1 den Dichtring im unverspannten Zustand;

Fig. 2 den in Fig. 1 gezeigten Dichtring nach dem Aufspannen auf den Kragen des Spitzendes; und

Fig. 3 den auf das Spitzende aufgezogenen Dichtring gem. Fig. 2 nach dem Einschub in eine Steckmuffe, also die Konstellation der fertigen Rohrsteckverbindung.

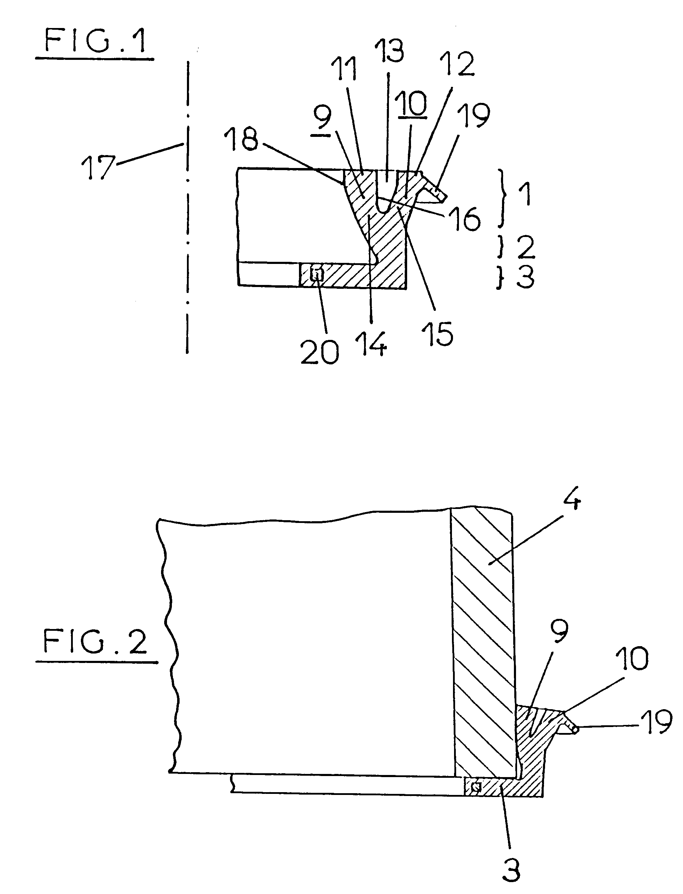

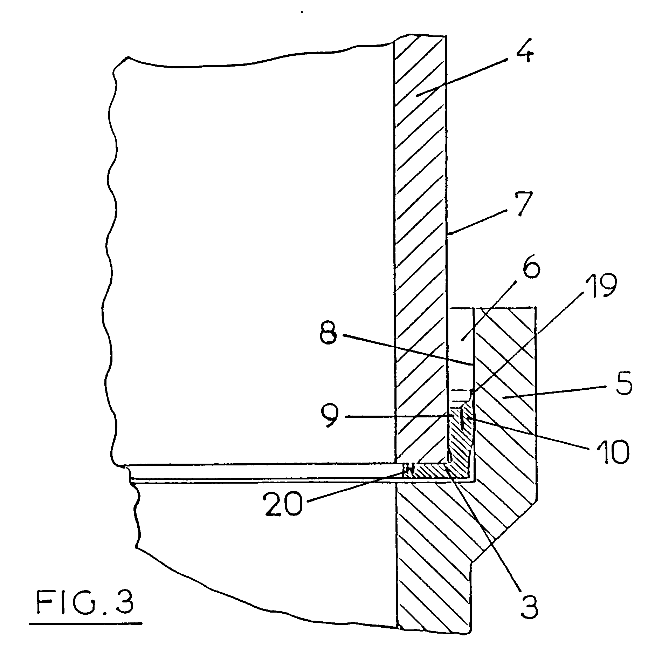

Der in der Fig. 1 im Axialschnitt und in Teildarstellung als Ausführungsbeispiel der Erfindung gezeigte Dichtring setzt sich aus einem Dichtringabschnitt 1, einem Zwischenringabschnitt 2 und einem Halteringabschnitt 3 zusammen. Zur Herstellung einer Rohrsteckverbindung wird der Dichtring zunächst auf die Stirnseite eines Rohrspitzendes 4 aufgesteckt oder aufgespannt (Fig. 2) und dann in eine Muffe 5 (Fig. 3) eingeschoben. Der Dichtringabschnitt 1 verschließt dabei hermetisch dichtend den Dichtspalt 6 zwischen der Außenwand 7 des Spitzendes 4 und der Innenwand 8 der Muffe 5 (Fig. 3).

Im unverspannten Zustand (Fig. 1) besteht der Dichtringabschnitt 1, bezogen auf die Muffe 5, aus einem im Axialschnitt sich nach axial außen V-förmig öffnenden Spreizlippenring 9,10, und ist dergestalt ausgebildet, daß die Summe der radialen Breiten der beiden Dichtlippen 9 und 10 des Spreizlippenringes in deren axial äußerem Randbereich 11 bzw. 12 größer ist als die innerhalb eines vorgegebenen Fertigungstoleranzbereiches größte radiale Dichtspaltbreite. Außerdem ist die Summe der radialen Breiten der beiden Dichtlippen 9, 10 des Spreizlippenringes in deren axial äußerem Randbereich 11 bzw. 12, die Ringspaltbreite 13 zwischen den beiden Dichtlippen nicht mitgerechnet, gerade 15 % größer als das Nennmaß für die Breite des Dichtspaltes 6 zwischen Spitzende 4 und Muffe 5. Außerdem ist die Summe der radialen Breiten dieser beiden Dichtlippen 9,10 in deren axial äußeren Randbereich 11 bzw. 12 größer als die Summe der entsprechenden radialen Breiten dieser beiden Dichtlippen 9,10 in deren axial weiter innenliegenden Bereichen 14 bzw. 15.

In der am besten aus Fig. 1 ersichtlichen Weise ist weiterhin die radial außenliegende Flankenfläche 16 der radial innenliegenden Dichtlippe 9 des Spreizlippenringes im entspannten Zustand des Dichtringes eine zur Mittelachse 17 des Dichtringes koaxiale Zylindermantelfläche, deren Durchmesser nur geringfügig größer als der Außendurchmesser des Spitzendes 4 ist. Dabei ist die radial innenliegende Raumfläche 18, die die radial innenliegende Dichtlippe 9 radial innen aufweist und die nach axial innen in die radial innere Wandfläche des Zwischenringabschnittes übergeht, so ausgebildet, daß sich diese Raumfläche 18 von axial außen nach axial innen, also zum Halteringabschnitt 3 hin, stetig parabelartig oder trichterförmig erweitert. Axial außen weist diese in sich ringförmig geschlossen umlaufende Raumfläche einen lichten Innendurchmesser auf, der deutlich kleiner als der im Rahmen des Fertigungstoleranzbereiches zu erwartende kleinste zugelassene Außendurchmesser des Spitzendes 4 ist, so daß die radial innenliegende Dichtlippe 9 bei allen Spitzenden, auf denen der in den Fig. 1 bis 3 gezeigte Dichtring aufzuziehen ist, durch eine mehr oder minder ausgeprägte radiale Aufweitung unter einer je nach den an die Dichtung gestellten Anforderungen eingestellten radialen Vorspannung anliegt.

In der insbesondere aus den Fig. 1 und 2 ersichtlichen Weise ist an dem axial außenliegenden Randbereich 12 der radial äußeren Dichtlippe 10 unter Bildung eines zweiten, sich im unverspannten Zustand des Dichtringes im Axialschnitt nach axial innen V-förmig öffnenden zweiten Spreizlippenringes eine dritte, nach radial auswärts und axial einwärts schräggestellte Dichtlippe 19 angeformt. Diese Dichtlippe 19, die sich beim Einschieben des auf dem Spitzende 4 vormontierten Dichtringes (Fig. 2) in die Muffe 5 (Fig. 3) nach axial auswärts unter Bildung einer ungewöhnlich effektiven Lippendichtung zwischen dem Dichtring und der Innenwand 8 der Muffe 5 nach axial auswärts umschlägt, ist wesentlich dünner und schwächer,also auch leichter verformbar, als die Dichtlippen 9,10 ausgebildet, so daß diese zusätzliche dritte Dichtlippe 19 auf die Einschubkräfte des mit dem Dichtring vorbestückten Spitzendes 4 in die Muffe 5 praktisch ohne Einfluß bleibt.

Obwohl die auf den Zwischenringabschnitt 2 und insbesondere auf den Halteringabschnitt 3 beim Einschieben des Spitzendes mit dem Dichtring in die Muffe einwirkenden Kräfte wesentlich geringer sind als bei dem Dichtring gemäß dem Stand der Technik, ist es in der bei den Ausführungsbeispielen in den Fig. 1 bis 3 gezeigten Weise bei Ausbildung des Dichtringes aus einem Elastomer mit nur einer einzigen Shore-Härte zweckmäßig, einen der mechanischen Stabilisierung des Halteringes 3 dienenden Armierungsring 20 aus Stahl in das Elastomer des Halteringabschnittes 3 einzuvulkanisieren.

**Patentansprüche**

1. Rohrsteckverbindung für Rohre aus mineralischen Werkstoffen, bestehend aus einem Spitzende, einer innennutfreien Muffe mit einem Falzring als Muffenspiegel und einem Dichtring aus einem gummielastischen Werkstoff, der seinerseits aus einem Dichtringabschnitt, einem Halteringabschnitt und einem beide Ringabschnitte miteinander verbindenden Zwischenringabschnitt besteht, wobei der Dichtringabschnitt den zwischen dem Außenmantel des Spitzendes und dem Innenmantel der Muffe gebildeten Dichtspalt dichtend verschließt und der Halteringabschnitt zur bestimmungsgemäßen Vormontage des Dichtringes auf dem Spitzende und zur Anlage an der Kragenstirnseite des Spitzendes nach Art eines kreisringförmigen Innenflansches ausgebildet ist, dadurch **gekennzeichnet**, daß der Dichtringabschnitt (1), bezogen auf die Muffe (5), als sich nach axial außen V-förmig öffnender Spreizlippenring (9,10) dergestalt ausgebildet ist, daß die Summe der radialen Breiten der beiden Dichtlippen (9,10) des Spreizlippenringes in deren axial äußerem Randbereich (11,12) größer ist als die innerhalb eines vorgegebenen Fertigungstoleranzbereiches größte radiale Dichtspaltbreite.

2. Rohrsteckverbindung nach Anspruch 1, dadurch **gekennzeichnet**, daß die Summe der radialen Breiten der beiden Dichtlippen (9, 10) des Spreizlippenringes in deren axial äußerem Randbereich (11,12) nicht mehr als höchstens 20 % größer ist als die innerhalb eines vorgegebenen Fertigungstoleranzbereiches größte radiale Dichtspaltbreite.

3. Rohrsteckverbindung nach einem der Ansprüche 1 oder 2, dadurch **gekennzeichnet**, daß die Summe der radialen Breiten der beiden Dichtlippen (9,10) des Spreizlippenringes in deren axial äußerem Randbereich (11,12) größer ist als die Summe der radialen Breiten dieser beiden Dichtlippen (9,10) in deren axial weiter innenliegenden Bereichen (14,15).

4. Rohrsteckverbindung nach einem der Ansprüche 1 bis 3, dadurch **gekennzeichnet**, daß die radial außenliegende Flankenfläche (16) der radial innenliegenden Dichtlippe (9) des Spreizlippenringes (9,10) im unverspannten Dichtring eine zur Mittelachse (17) des Dichtringes koaxiale Zylindermantelfläche ist, deren Durchmesser zumindest im wesentlichen gleich oder nur geringfügig größer ist als der Außendurchmesser des Spitzendes (4).

5. Rohrsteckverbindung nach einem der Ansprüche 1 bis 4, dadurch **gekennzeichnet**, daß unter Bildung eines zweiten, sich im unverspannten Dichtring im Axialschnitt nach axial innen V-förmig öffnenden Spreizlippenringes (10,19) am axial außenliegenden Rand der radial außenliegenden Dichtlippe (10) eine dritte, nach radial auswärts und axial einwärts schräggestellte Dichtlippe (19) angeformt ist.

6. Rohrsteckverbindung nach Anspruch 5, dadurch **gekennzeichnet**, daß die dritte Dichtlippe (19) dünner und/oder spannungsschwächer als die beiden anderen, auch im unverspannten Dichtring nach axial auswärts stehenden Dichtlippen (9,10) ausgebildet ist.

7. Rohrsteckverbindung nach einem der Ansprüche 1 bis 6, dadurch **gekennzeichnet**, daß der gesamte Dichtring aus einem Gummi mit nur einer einzigen Shore-Härte besteht.

8. Rohrsteckverbindung nach einem der Ansprüche 1 bis 7, dadurch **gekennzeichnet**, daß der Halteringabschnitt (3) in seinem auf der stirnseitigen Kreisringfläche des Kragens des Spitzendes (4) aufliegenden Bereich mit einem einvulkanisierten Armierungsring (20), insbesondere Stahlring, verstärkt ist.

## Claims

1. Pipe socket connection for pipes made from mineral materials, comprising a spigot end, an internal-groove-free socket with a notched ring acting as socket face and a sealing ring made from a rubber-elastic material, which sealing ring in turn comprises a sealing ring section, a retaining ring section and an intermediate ring section linking the two ring sections, the sealing ring section sealing up the sealing gap formed between the outer jacket of the spigot end and the inner jacket of the socket and the retaining ring being designed, for the intended pre-mounting of the sealing ring on the spigot end and for the contact against the collar face of the spigot end, in the form of a circular ring-shaped inner flange, characterised in that the sealing ring section (1), related to the socket (5), is formed as an expanding lip ring (9, 10), opening axially outwards in a V-shape, such that the sum of the radial widths of the two sealing lips (9, 10) of the expanding lip ring in their axially outer fringe (11, 12) is greater than the maximum radial sealing gap width within a pre-defined production tolerance range.

2. Pipe socket connection according to Claim 1, characterised in that the sum of the radial widths of the two sealing lips [lacuna] 10) of the expanding lip ring in their axially outer fringe (11, 12) is no more than at most 20% greater than the maximum radial sealing gap width within a pre-defined production tolerance range.

3. Pipe socket connection according to one of Claims 1 or 2, characterised in that the sum of the radial widths of the two sealing lips (9, 10) of the expanding lip ring in their axially outer fringe (11, 12) is greater than the sum of the radial widths of these two sealing lips (9, 10) in their axially more inward areas (14, 15).

4. Pipe socket connection according to one of the Claims 1 to 3, characterised in that the radially outer flank surface (16) of the radially inner sealing lip (9) of the expanding lip ring (9, 10) in the unbraced sealing ring is a cylinder jacket surface coaxial to the centre axis (17) of the sealing ring, the diameter of which surface is at least essentially equal to or only slightly greater than the outside diameter of the spigot end (lacuna).

5. Pipe socket connection according to one of the Claims 1 to 4, characterised in that, with the creation of a second expanding lip ring (10, 19), which opens, in the unbraced state of the sealing ring, in axial section axially inwards in a V-shape, onto the axially outer edge of the radially outer sealing lip (10) there is moulded a third, radially outwardly and axially inwardly slanted sealing lip (19).

6. Pipe socket connection according to Claim 5, characterised in that the third sealing lip (19) is designed to be thinner and/or of weaker tension than the two other sealing lips (9, 10) which, even in the unbraced sealing ring, stand axially outwards.

7. Pipe socket connection according to one of Claims 1 to 6, characterised in that the entire sealing ring is made of rubber with only a single Shore-hardness.

8. Pipe socket connection according to one of Claims 1 to 7, characterised in that the retaining ring section (3), in its area resting on the face-side circular ring surface of the collar of the spigot end (4), is reinforced with a vulcanized-in armouring ring (20), more particularly a steel ring.

## Revendications

1. Liaison par emboîtement pour tuyaux en matériaux minéraux, constituée d'une extrémité mâle, d'un manchon sans rainure intérieure, comportant, comme surface complémentaire au manchon, un anneau rainuré, et d'une bague d'étanchéité en matériau caoutchouté élastique, qui, pour sa part, est constituée d'un élément annulaire formant joint, d'un élément annulaire formant bague de maintien et d'un élément annulaire intermédiaire, reliant l'un avec l'autre ces deux éléments annulaires, étant entendu que l'élément annulaire formant joint obture de façon hermétique l'intervalle d'étanchéité formé entre la surface externe de l'extrémité mâle et la surface intérieure du manchon, et que l'élément annulaire formant bague de maintien est réalisé, pour un prémontage déterminé de la bague d'étanchéité sur l'extrémité mâle, et pour un contact sur la face frontale de la collerette de l'extrémité mâle, à la manière d'une bride intérieure de forme circulaire, caractérisée en ce que l'élément annulaire formant joint (1) est réalisé, par rapport au manchon (5), sous la forme d'une bague à lèvres à expansion (9, 10) s'ouvrant en forme de V axialement vers l'extérieur, de telle façon que la somme des largeurs radiales des deux lèvres d'étanchéité (9, 10) de la bague à lèvres à expansion, dans leur zone de bordure axialement extérieure, soit plus grande que la plus grande largeur axiale de l'intervalle d'étanchéité situé à l'intérieur d'un domaine de tolérance de finition donné à l'avance.

2. Liaison par emboîtement pour tuyaux suivant la revendication 1, caractérisée en ce que la somme des largeurs radiales des deux lèvres d'étanchéité (9, 10) de la bague à lèvres à expansion, dans leur zone de bordure extérieure axialement (11, 12), ne soit pas plus grande de plus de 20 % que la plus grande largeur axiale de l'intervalle d'étanchéité à l'intérieur d'un domaine de tolérance de finition donné à l'avance.

3. Liaison par emboîtement pour tuyaux suivant la revendication 1 ou la revendication 2, caractériséé en ce que la somme des largeurs radiales des deux lèvres d'étanchéité (9, 10) de la bague à lèvres à expansion, dans leur zone de bordure axialement extérieure, est plus grande que la somme des largeurs radiales de ces deux lèvres d'étanchéité (9, 10) dans leurs zones situées axialement plus loin à l'intérieur (13, 14).

4. Liaison par emboîtement pour tuyaux suivant l'une quelconque des revendications 1 à 3, caractérisée en ce que la surface de flanc, située radialement à l'extérieur, de la lèvre d'étanchéité (9), située radialement à l'intérieur de la bague à lèvres à expansion (9, 10), dans la bague d'étanchéité sans serrage, est, par rapport à l'axe central de la bague d'étanchéité, une surface externe cylindrique coaxiale dont le diamètre est essentiellement au moins égal ou un peu plus grand que le diamètre extérieur de l'extrémité mâle.

5. Liaison par emboîtement pour tuyaux suivant l'une quelconque des revendications 1 à 4, caractérisée en ce qu'en réalisant une deuxième bague à lèvres à expansion (10, 19) s'ouvrant en forme de V axialement vers l'intérieur, en coupe axiale, dans la bague d'étanchéité non serrée, une troisième lèvre d'étanchéité (19), placée inclinée, radialement vers l'extérieur et axialement vers l'intérieur, est rapportée sur la bordure, se trouvant axialement vers l'extérieur, de la lèvre d'étanchéité (10).

6. Liaison par emboîtement pour tuyaux suivant la revendication 5, caractérisée en ce que la troisième lèvre d'étanchéité (19) est plus mince et plus faible en serrage que les deux autres lèvres d'étanchéité (9, 10) se trouvant axialement vers l'extérieur, également dans la bague d'étanchéité non serrée.

7. Liaison par emboîtement pour tuyaux suivant l'une quelconque des revendications 1 à 6, caractérisée en ce que la totalité de la bague d'étanchéité est constituée d'un caoutchouc comportant une unique dureté Shore.

8. Liaison par emboîtement pour tuyaux suivant l'une quelconque des revendications 1 à 7, caractérisée en ce que l'élément annulaire formant bague de maintien (3), dans sa zone appliquée sur la surface circulaire, côté frontal, de la collerette de l'extrémité mâle (4), est renforcé avec un anneau d'armature (20) vulcanisé à l'intérieur, en particulier, un anneau d'acier.

FIG.1

FIG.2

FIG.3